# EUROPEAN PATENT APPLICATION

(11) **EP 2 985 730 A1**
(43) Date of publication of application: **17.02.2016**
(21) Application number: 15180597.5
(22) Date of filing: 11.08.2015
(51) Int. Cl.: G06Q 50/00, G06Q 10/10

(54) **METHOD AND DEVICE FOR PARTIALLY-UPGRADING**

(30) Priority: 12.08.2014 CN 201410395821
(71) Applicant: Xiaomi Inc., Beijing 100085 (CN)
(72) Inventor: FAN, Jialin, 100085 BEIJING (CN); QU, Heng, 100085 BEIJING (CN); MA, Baiming, 100085 BEIJING (CN)
(74) Representative: Underwood, Nicolas Patrick

(57) **Abstract**

The present disclosure relates to a method and device for partially-upgrading. The method comprises: determining (101) a social group to be partially-upgraded; determining (102) user accounts to be partially-upgraded in the social group; partially-upgrading (103) applications corresponding to the user accounts according to predetermined relationships between the user accounts and application identifications or partially-upgrading devices corresponding to the user accounts according to predetermined relationships between the user accounts and device identifications.

## Description

### TECHNICAL FIELD

The present disclosure relates to the field of computers, and more particularly, to a method for partially-upgrading and a device for partially-upgrading.

### BACKGROUND

Because of the development of the internet, industries related to the internet develop rapidly, and the biggest advances in terminal devices concern upgrades of operating systems and applications. In order to ensure that all users can use the updated application or the updated operating system normally after the upgrade, it is necessary to partially-upgrade a few users before upgrading all the users. The partial-upgrade is a smooth switching when performing the upgrade.

Inventors of the present disclosure have found that, in the related art, if the operating system and the application need to be upgraded, it is required to partially-upgrade several terminal devices first as a test, and then other devices are upgraded according to a result obtained after partially-upgrading the several terminal devices, thus ensuring that there is no problem in this upgrade. That is, instead of upgrading all the terminal devices simultaneously, several terminal devices are upgraded first, and then other terminal devices are upgraded. When performing a partial-upgrade, a server needs to obtain an identification of each terminal device participating in the partial-upgrade and to send a notification of partially-upgrading to each terminal device participating in the partial-upgrade, and then these terminal devices participating in the partial-upgrade are upgraded according to the notifications. However, some devices are not suitable for being partially-upgraded, such that an intended upgrade effect cannot be achieved. Thus, how to upgrade suitable devices is a problem to be solved.

### SUMMARY

In order to overcome problems existing in the related art, the present disclosure provides a method for partially-upgrading and a device for partially-upgrading, which achieves quickly notifying terminal devices which require being partially-upgraded to perform a partial-upgrade, thus reducing the number of notifications and saving time.

According to a first aspect of embodiments of the present disclosure, there is provided a method for partially-upgrading, including:
determining a social group to be partially-upgraded;
determining user accounts to be partially-upgraded in the social group;
partially-upgrading applications corresponding to the user accounts according to predetermined relationships between the user accounts and application identifications or partially-upgrading devices corresponding to the user accounts according to predetermined relationships between the user accounts and device identifications.

In other words, only a portion of the applications/devices each corresponding to the user accounts to be partially-upgraded will be upgraded.

It should also be noted that a social group is a group of users of a same social network or social application.

The method according to this embodiment of the present disclosure can have advantageous effects as follows. With this embodiment of the present disclosure, the social group suitable for being partially-upgraded is determined firstly, and then users are determined according to the social group and the applications or the devices corresponding to the users are partially-upgraded. Since the applications or the devices corresponding to the users are more suitable for being partially-upgraded, a better testing effect may be obtained.

In an optional embodiment, determining user accounts to be partially-upgraded in the social group includes:
defining all user accounts in the social group as the user accounts to be partially-upgraded; or
determining user accounts with first activities greater than a predetermined first threshold in the social group.

The method according to this embodiment of the present disclosure can have advantageous effects as follows. With this embodiment of the present disclosure, all the users in the social group may be partially-upgraded, or the users with higher activities may be partially-upgraded, while the effect of the latter is better.

In an optional embodiment, a first activity of a user account is obtained by:
obtaining a latest record of an activity of the user account, in which the record comprises active times of the user account in a predetermined time period, and active times of all other user accounts in a same social group as the user account;
determining the first activity of the user account according to the active times of the user account and the active times of all other user accounts in the same social group as the user account.

The method according to this embodiment of the present disclosure can have advantageous effects as follows. This embodiment of the present disclosure provides an implementation of determining the activity, such that the users with higher activities and the social group with a higher activity may be determined accurately.

In an optional embodiment, determining a social group to be partially-upgraded includes:
defining a social group with a second activity greater than a predetermined second threshold as the social group to be partially-upgraded; or
determining a plurality of user accounts with third activities greater than a predetermined third threshold and defining a common social group comprising the plurality of user accounts as the social group to be partially-upgraded; or
defining a social group with a fourth activity regarding a predetermined keyword greater than a predetermined fourth threshold as the social group to be partially-upgraded.

The method according to this embodiment of the present disclosure can have advantageous effects as follows. With this embodiment of the present disclosure, the social group suitable for being partially-upgraded may be determined according to activities of social groups. Users in the determined social group are more suitable for being partially-upgraded, such that the testing effect is better.

In an optional embodiment, partially-upgrading applications corresponding to the user accounts according to predetermined relationships between the user accounts and application identifications or partially-upgrading devices corresponding to the user accounts according to predetermined relationships between the user accounts and device identifications includes:
sending notifications of partially-upgrading to the user accounts;
receiving responses indicating that it is allowed to partially-upgrade;
partially-upgrading the applications corresponding to the user accounts according to the predetermined relationships between the user accounts and application identifications or partially-upgrading the devices corresponding to the user accounts according to the predetermined relationships between the user accounts and device identifications.

The method according to this embodiment of the present disclosure can have advantageous effects as follows. With this embodiment of the present disclosure, a partial-upgrade may be performed under an authorization of a user, which is more suitable for the user's needs and a security requirement.

In an optional embodiment, partially-upgrading applications corresponding to the user accounts according to predetermined relationships between the user accounts and application identifications or partially-upgrading devices corresponding to the user accounts according to predetermined relationships between the user accounts and device identifications includes:
determining the application identifications corresponding to the user accounts according to the predetermined relationships between the user accounts and application identifications or determining the device identifications corresponding to the user accounts according to the predetermined relationships between the user accounts and device identifications;
sending the application identifications or the device identifications to an upgrading server to instruct the upgrading server to partially-upgrade the applications or the devices corresponding to the user accounts.

The method according to this embodiment of the present disclosure can have advantageous effects as follows. In this embodiment of the present disclosure, the server determining the users may be not the upgrading server, thus the method is convenient for a distributed deployment of servers.

In an optional embodiment, partially-upgrading applications corresponding to the user accounts according to predetermined relationships between the user accounts and application identifications or partially-upgrading devices corresponding to the user accounts according to predetermined relationships between the user accounts and device identifications includes:
sending notifications of partially-upgrading to the user accounts according to the predetermined relationships between the user accounts and application identifications or the predetermined relationships between the user accounts and device identifications, in which the notifications comprise the application identifications or the device identifications corresponding to the user accounts;
receiving upgrading requests sent by the applications or the devices corresponding to the user accounts;
partially-upgrading the applications or the devices corresponding to the user accounts.

The method according to this embodiment of the present disclosure can have advantageous effects as follows. In this embodiment of the present disclosure, the device supporting applications and the device being partially-upgraded may identify a notification actively and send a upgrading request actively, thus improving the efficiency of upgrading.

According to a second aspect of embodiments of the present disclosure, there is provided a device for partially-upgrading, including:
a group determining module, configured to determine a social group to be partially-upgraded;
a user determining module, configured to determine user accounts to be partially-upgraded in the social group;
an upgrading module, configured to partially-upgrade applications corresponding to the user accounts according to predetermined relationships between the user accounts and application identifications or partial-upgrade devices corresponding to the user accounts according to predetermined relationships between the user accounts and device identifications.

In an optional embodiment, the device further includes:
an activity recording module, configured to obtain a latest record of an activity of a user account, in which the record comprises active times of the user account in a predetermined time period, and active times of all other user accounts in a same social group as the user account;
an activity determining module, configured to determine the first activity of the user account according to the active times of the user account and the active times of all other user accounts in the same social group as the user account.

In an optional embodiment, the group determining module includes:
a first group unit, configured to define a social group with a second activity greater than a predetermined second threshold as the social group to be partially-upgraded;
a second group unit, configured to determine a plurality of user accounts with third activities greater than a predetermined third threshold and define a common social group comprising the plurality of user accounts as the social group to be partially-upgraded; or
a third group unit, configured to define a social group with a fourth activity regarding a predetermined keyword greater than a predetermined fourth threshold as the social group to be partially-upgraded.

In an optional embodiment, the user determining module includes a first user unit and a second user unit; in which
the first user unit is configured to define all user accounts in the social group as the user accounts to be partially-upgraded;
the second user unit is configured to determine user accounts with first activities greater than a predetermined first threshold in the social group.

In an optional embodiment, the upgrading module includes:
a first notifying unit, configured to send notifications of partially-upgrading to the determined user accounts;
a first receiving unit, configured to receive responses indicating that it is allowed to partially-upgrade;
a first upgrading unit, configured to partially-upgrade the applications corresponding to the user accounts according to the predetermined relationships between the user accounts and application identifications or partially-upgrade the devices corresponding to the user accounts according to the predetermined relationships between the user accounts and device identifications.

In an optional embodiment, the upgrading module includes:
a searching module, configured to determine the application identifications corresponding to the user accounts according to the predetermined relationships between the user accounts and application identifications or determine the device identifications corresponding to the user accounts according to the predetermined relationships between the user accounts and device identifications;
a sending unit, configured to send the application identifications or the device identifications to an upgrading server to instruct the upgrading server to partially-upgrade the applications or the devices corresponding to the user accounts.

In an optional embodiment, the upgrading module includes:
a second notifying unit, configured to send notifications of partially-upgrading to the user accounts according to the predetermined relationships between the user accounts and application identifications or the predetermined relationships between the user accounts and device identifications, in which the notifications comprise the application identifications or the device identifications corresponding to the determined user accounts;
a second receiving unit, configured to receive upgrading requests sent by the applications or the devices corresponding to the user accounts;
a second upgrading unit, configured to partially-upgrade the applications or the devices corresponding to the user accounts.

According to a third aspect of embodiments of the present disclosure, there is provided a device for partially-upgrading, including:
a processor;
a memory configured to store instructions executable by the processor;
in which the processor is configured to:
   determine a social group to be partially-upgraded;
   determine user accounts to be partially-upgraded in the social group;
   partially-upgrade applications corresponding to the user accounts according to predetermined relationships between the user accounts and application identifications or partially-upgrade devices corresponding to the user accounts according to predetermined relationships between the user accounts and device identifications.

According to a fourth aspect of embodiments of the present disclosure, there is provided a computer program product having stored therein instructions that, when executed by a processor of a mobile terminal, causes the mobile terminal to perform:
determining a social group to be partially-upgraded;
determining user accounts to be partially-upgraded in the social group; and
partially-upgrading applications corresponding to the user accounts according to predetermined relationships between the user accounts and application identifications or partially-upgrading devices corresponding to the user accounts according to predetermined relationships between the user accounts and device identifications.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart illustrating a method for partially-upgrading according to an exemplary embodiment of the present disclosure;
Fig. 2 is a flow chart illustrating a detailed method for partially-upgrading according to an exemplary embodiment of the present disclosure;
Fig. 3 is a flow chart illustrating another detailed method for partially-upgrading according to an exemplary embodiment of the present disclosure;
Fig. 4 is a block diagram illustrating a device for partially-upgrading according to an exemplary embodiment of the present disclosure;
Fig. 5 is a block diagram illustrating a group determining module according to an exemplary embodiment of the present disclosure;
Fig. 6 is a block diagram illustrating a user determining module according to an exemplary embodiment of the present disclosure;
Fig. 7 is a block diagram illustrating a device for partially-upgrading according to an exemplary embodiment of the present disclosure;
Fig. 8 is a block diagram illustrating an upgrading module according to an exemplary embodiment of the present disclosure;
Fig. 9 is a block diagram illustrating an upgrading module according to an exemplary embodiment of the present disclosure;
Fig. 10 is a block diagram illustrating an upgrading module according to an exemplary embodiment of the present disclosure; and
Fig. 11 is block diagram illustrating a device for partially-upgrading according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

In the related art, versions of an operating system and applications in a terminal device need to be upgraded. After version upgrade packages are produced and tested by skilled technicians, an upgrade can be performed. However, since there are limitations on the test performed by the skilled technicians on the version upgrade packages, it is impossible to determine completely that all users can use the operating system and applications normally after the upgrade. Thus, in order to ensure that all the users can use the operating system and applications normally and can obtain new functions after the upgrade, a few users need to be partially-upgraded before upgrading all the users. The partial-upgrade is a smooth switching when performing an upgrade. If the operating system and the applications need to be upgraded, it is required to partially-upgrade several terminal devices first as a test, and then other devices are upgraded according to a result obtained after partially-upgrading the several terminal devices, thus ensuring that there is no problem in this upgrade of the terminal devices. That is, instead of upgrading all the terminal devices synchronously, several terminal devices are upgraded firstly, and then other terminal devices are upgraded. In the related art, when performing the partial-upgrade, a server sends the version upgrade packages to some devices required to be partially-upgraded.

In order improve the known solutions, embodiments of the present disclosure provide a method for partially-upgrading. With the method for partially-upgrading, a social group with a higher activity and users with higher activities are selected. This kind of users may take a long time on the internet, and may produce more businesses on the internet, such that these users are more suitable for being partially-upgraded, thus obtaining a better testing effect.

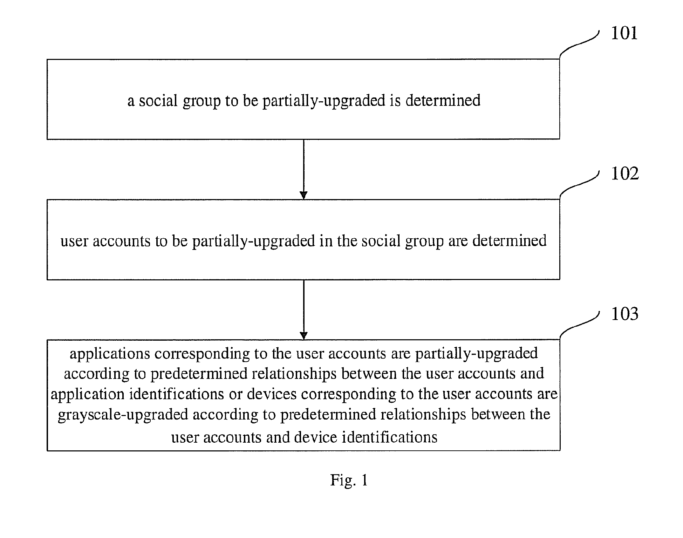

Fig 1 is a flow chart illustrating a method for partially-upgrading according to an exemplary embodiment of the present disclosure. As shown in Fig. 1, the method for partially-upgrading may be applied in a mobile terminal, a router or a server, and includes following steps.

In step 101, a social group to be partially-upgraded is determined.

In step 102, user accounts to be partially-upgraded in the social group are determined.

In step 103, applications corresponding to the user accounts are partially-upgraded according to predetermined relationships between the user accounts and application identifications or devices corresponding to the user accounts are partially-upgraded according to predetermined relationships between the user accounts and device identifications, so that only a portion of the applications/devices each corresponding to the user accounts to be partially-upgraded will be upgraded.

In an embodiment, there may be many ways for implementing step 101, referring to Way A1-Way A3.

Way A1: A social group with a second activity greater than a predetermined second threshold is defined as the social group to be partially-upgraded, in which the second activity of the social group is determined according to first activities corresponding to user accounts in the social group. An activity of a user account refers to a frequency of logging in the social group by the user account or a frequency of chatting in the social group to communicate with other users in the social group. If a user account logs in a social group frequently or communicates with other users in the social group frequently, the user account may be considered as an active user account.

The second activity of the social group may be determined according to the first activities corresponding to the user accounts in the social group by following steps (such as steps B1-B4).

In step B1, the first activities of all the user accounts in the social group are determined.

In step B2, a number of user accounts with first activities reaching a predetermined first threshold is determined.

In step B3, it is judged whether the number of user accounts with first activities reaching the predetermined first threshold is greater than a predetermined fifth threshold.

In step B4, if the number of user accounts with first activities reaching the predetermined first threshold is greater than the predetermined fifth threshold, the social group with the second activity greater than the predetermined second threshold in social groups comprising the bound user account is determined.

In this embodiment, activities of social groups are analyzed respectively to determine a more active social group. Users in the more active social group are more suitable for being partially-upgraded.

Way 2: A plurality of user accounts with third activities greater than a predetermined third threshold are determined and a common social group comprising the plurality of user accounts is defined as the social group to be partially-upgraded. When performing a partial-upgrade, identifications of multiple terminal devices are required, and multiple user accounts bound to the multiple terminal devices may join multiple social groups. Thus, by determining the common social group comprising the multiple user accounts, a scope of social groups required to be sent notifications of partially-upgrading may be reduced, and more identifications of terminal devices required to be partially-upgraded are included in the determined social group. The way for determining the third activity of a user account is the same as the way for determining the first activity of the user account, referring to following descriptions.

In this embodiment, users with higher activities are determined firstly, and then the common social group comprising the active users is determined. Users in this kind of social group are more active and more suitable for being partially-upgraded. And in following steps, the notification of upgrading may be sent to the social group rather than to the active users one by one, such that a notification scope is reduced and a notification efficiency is improved, thus improving the efficiency of partially-upgrading.

Way A3: A social group with a fourth activity regarding a predetermined keyword greater than a predetermined fourth threshold is defined as the social group to be partially-upgraded. In this embodiment, the keyword may be a keyword related to a partial-upgrade. For example, if a router is required to be partially-upgraded, the keyword may include a router, a network and IP etc. In this embodiment, a more active social group regarding this partial-upgrade is determined, and users in the social group are more suitable for this partial-upgrade, thus obtaining a better effect of upgrading.

The fourth activity may be a ratio of a number of activities including the predetermined keyword in a predetermined time period (such as a number of chatting records including the predetermined keyword) to active times of all user accounts in the predetermined time period.

In an embodiment, there are many ways for implementing step 102, such as Way C1 and Way C2.

Way C1: All user accounts in the social group are defined as the user accounts to be partially-upgraded. In step 101, the social group with a higher activity has been selected, and thus compared to the related art, all users in the social group are more suitable for being partially-upgraded.

Way C2: User accounts with first activities greater than a predetermined first threshold in the social group are determined.

In way C2, a first activity of a user account may be obtained by following steps, referring to step C21 and step C22.

In step C21, a latest record of an activity of the user account is obtained, in which the record comprises active times of the user account in a predetermined time period, and active times of all other user accounts in a same social group as the user account.

In step C22, the first activity of the user account is determined according to the active times of the user account and the active times of all other user accounts in the same social group as the user account.

In this embodiment, users which are more active are further selected from the more active social group, such that a scope to be partially-upgraded is reduced and the selected users are more suitable for being partially-upgraded, thus improving the testing effect.

In an embodiment, there are many ways for implementing step 103, such as Ways D1-D3.

Way D1 includes steps D11-D13.

In step D11, notifications of partially-upgrading are sent to the determined user accounts. In this step, the notifications of partially-upgrading may be sent to the determined user accounts one by one, or a notification of partially-upgrading may be broadcasted in the social group. If all the users in the social group are required to be partially-upgraded, broadcasting the notification may be possible. If some of the users in the social group are required to be partially-upgraded, the notifications include the determined user accounts. A terminal supporting a determined user account may receive a notification, and may output the notification to a user after analyzing the local user account included in the notification and ask the user whether a partial-upgrade is performed. The user may agree or refuse to perform the partial-upgrade. If the user agrees to perform the partial-upgrade, the terminal sends a response indicating that it is allowed to partially-upgrade to the server. And then step D12 is followed.

In step D12, responses indicating that it is allowed to partially-upgrade are received.

In step D13, the applications corresponding to the user accounts are partially-upgraded according to the predetermined relationships between the user accounts and application identifications, or the devices corresponding to the user accounts are partially-upgraded according to the predetermined relationships between the user accounts and device identifications.

In this embodiment, an authorization of an active user is requested after the active user is determined, and a partial-upgrade is performed after obtaining the authorization of the active user, thus meeting the user's requirement and ensuring the security.

Way D2 includes steps D21-D22.

In step D21, the application identifications corresponding to the user accounts are determined according to the predetermined relationships between the user accounts and application identifications, or the device identifications corresponding to the user accounts are determined according to the predetermined relationships between the user accounts and device identifications.

In step D22, the application identifications or the device identifications are sent to an upgrading server to instruct the upgrading server to partially-upgrade the applications or the devices corresponding to the user accounts.

In this embodiment, when a user registers or logs in a social group via a user account, a relationship between the user account and an application identification or a relationship between the user account and a device identification is sent to the server. The server may further determine an application to be partially-upgraded or a device to be partially-upgraded after determining the active user account, and may send an upgrade package to a device including the application to be partially-upgraded or the device to be partially-upgraded. If the server supporting the social group is not the server performing the partial-upgrade, the server supporting the social group sends the application identification of the application to be partially-upgraded and the device identification of the device to be partially-upgraded to the server performing the partial-upgrade (i.e. the upgrading server). Then, the upgrade package is sent by the upgrading server. In this way, it is convenient for the distributed deployment of the servers and compatible with server architecture in the related art.

Of course, Way D2 may be implemented in conjunction with Way D1. The notification of partially-upgrading is sent to the user before the upgrade package is sent, and the upgrade package is sent after the user allows to upgrade.

Way D3 includes steps D31-D33.

In step D31, notifications of partially-upgrading are sent to the user accounts according to the predetermined relationships between the user accounts and application identifications or the predetermined relationships between the user accounts and device identifications, in which the notifications comprise the application identifications or the device identifications corresponding to the user accounts. The notifications of partially-upgrading may be sent to the determined user accounts one by one, or may be broadcasted in the social group. In this embodiment, the notifications of partially-upgrading are sent in instant messaging manner. Devices supporting the applications to be partially-upgraded or the devices to be partially-upgraded may receive the notifications, analyze the notifications actively, and send upgrading requests if it is identified that the notifications include the local application identifications or device indentifications. And then, step D32 is followed.

In step D32, upgrading requests sent by the applications or the devices corresponding to the user accounts are received.

In step D33, the applications or the devices corresponding to the user accounts are partially-upgraded.

For example, the applicaion to be partially-upgraded is an application in a terminal and the user chats in a social group using an instant messaging client in the teminal. The server broadcasts a notification of partially-upgrading in the social group, and the terminal receives the notification via the local instant messaging client and analyzes the notification. A upgrading request is sent to the server if it is identified that a user account included in the notification is local.

For another example, a device to be partially-upgraded is a router, and the user connects to the internet via the router. All messages received or sent by the user in a social group pass through the router. Then, the server broadcasts a notification of partially-upgrading in the social group, and the router analyzes the notification actively after receiving the notification and sends a upgrading request to the server actively if it is identified that a local user account is included in the notification.

In this embodiment, the device receiving the notification may sent the upgrading request to the server actively without determining by the server the application identification of the application to be partially-upgraded or the device identification of the device to be partially-upgraded. Thus, the efficiency of partially-upgrading is improved.

Of course, Way D3 may be implemented in conjunction with Way D2. The server supporting the social group broadcasts the notification in the social group. The terminal receiving the notificaiton sends the upgrading request to the upgrading server. And then, the upgrading server sends the upgrade package to the terminal.

In the following, a method for partially-upgrading according to embodiments of the present disclosure is described with reference to a specific embodiment.

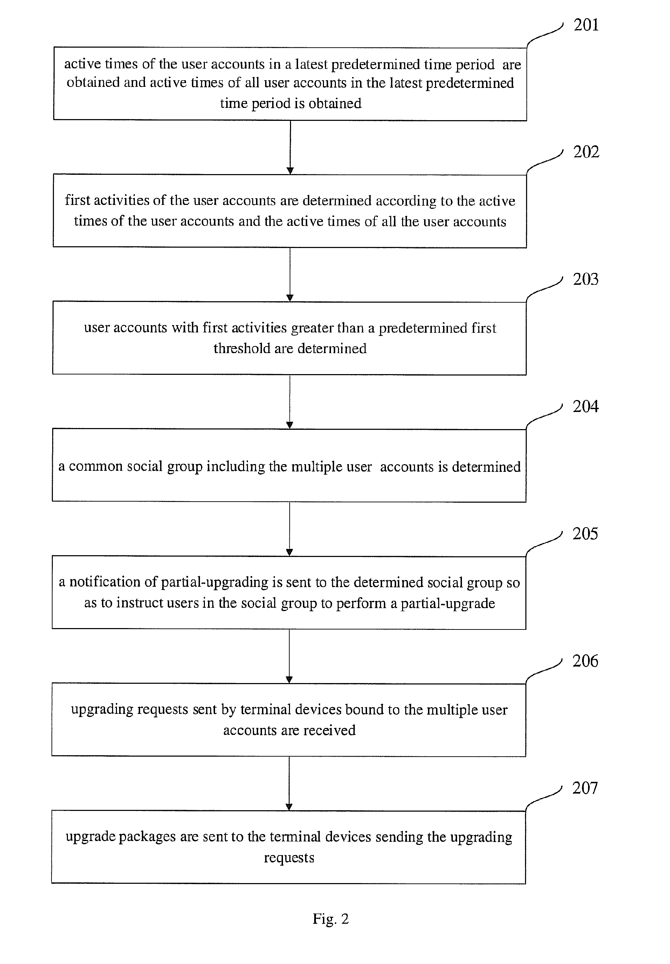

As shown in Fig. 2, the method for partially-upgrading according to embodiments of the present disclosure may be realized by a mobile terminal, a router or a server. Sepcific steps for implementing the method are as follows.

Terminal device idnetifications A, B, C, D are respectively bound to user accounts A1, B1, C1, D1.

In step 201, active times of the user accounts A1, B1, C1, D1 in a latest predetermined time period (such as a month) are obtained, which are 5 for user account A1, 20 for user account B1, 15 for user account C1 and 35 for user account D1. In addition, the active times of all user accounts in the latest predetermined time period (such as a month) is obtained, which is 100.

In step 202, first activities of the user accounts are determined according to the active times of the user accounts (A1:5, B1:20, C1:15, D1:35) and the active times (100) of all the user accounts, which are 5% for user account A1, 20% for user account B1, 15% for user account C1 and 35% for user account D1.

In step 203, user accounts with first activities greater than a predetermined first threshold are determined.

Assuming that the predetermined first threshold is 18%, the user accounts with first activities greater than the predetermined first threshold are user account B1 (20%) and user account D1 (35%).

If there are multiple teminal device identificaions of multiple terminal devices required to be partially-upgraded and multiple user accounts, following steps are performed.

In step 204, a common social group including the multiple user accounts is determined.

Assuming that user account B1 joins in three social groups which are X1, X2 and X3, user account D1 joins in four social groups which are X2, X4, X5 and X6, the commone social group including both user account B1 and user account D1 is determined as X2.

In step 205, a notification of partially-upgrading is sent to the determined social group so as to instruct users in the social group to perform a partial-upgrade.

The notification of partially-upgrading is sent to social group X2 so as to instruct users in social group X2 to perform a partial-upgrade.

In step 206, upgrading requests sent by terminal devices bound to the multiple user accounts are received. The terminal devices bound to the multiple user accounts are B and D.

In step 207, upgrade packages are sent to the terminal devices sending the upgrading requests.

With the method for partially-upgrading according to embodiments of the present disclosure, the terminal device identifications of the terminal devices required to be partially-upgraded are determined by determining the first activities of the user accounts, such that only active terminal devices can obtain a chance of partially-upgrading, thus reducing a scale of partially-upgrading. Then, by determining the common social group in which the user accounts corresponding to the multiple terminal device identifications join as the social group required to be sent the notification of partially-upgrading, a scope of social groups required to be sent the notifications of partially-upgrading is reduced, thus ensuring that the determined social group include more terminal device identifications of terminal devices required to be partially-upgraded. In this way, terminal devices required to be partially-upgraded are instructed quickly to perform a partial-upgrade, thus reducing the number of notifications and saving time.

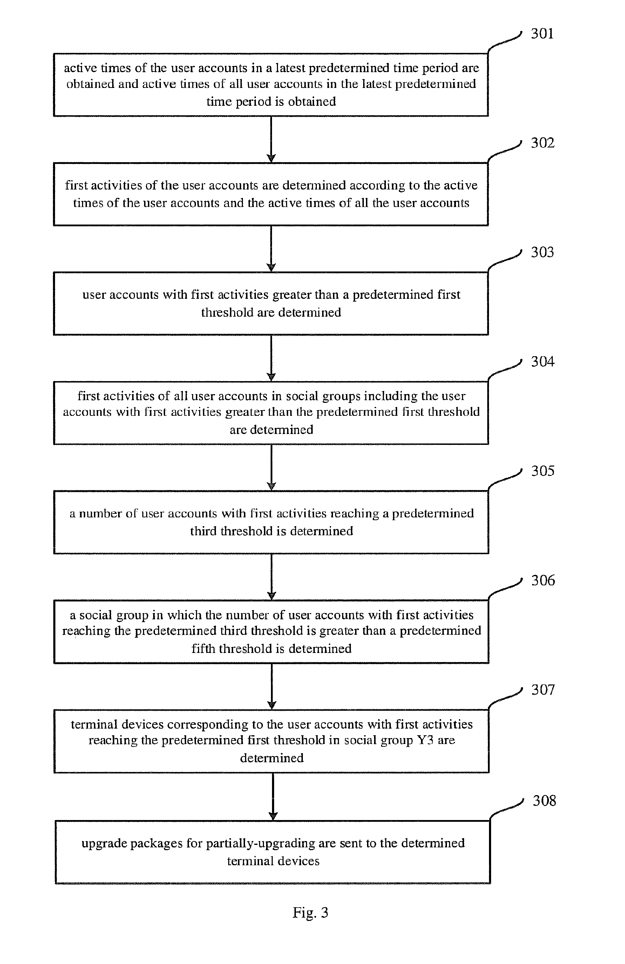

As shown in Fig. 3, a method for partially-upgrading according to embodiments of the present disclosure may be realized by a mobile terminal, a router or a server. Specific steps for implementing the method are as follows.

Terminal device idnetifications A, B, C, D are respectively bound to user accounts A1, B1, C1, D1.

In step 301, active times of the user accounts A1, B1, C1, D1 in a latest predetermined time period (such as a month) are obtained, which are 5 for user account A1, 20 for user account B1, 15 for user account C1 and 35 for user account D1. And the number of active times of all user accounts in the latest predetermined time period (such as a month) is obtained which is 100.

In step 302, first activities of the user accounts are determined according to the active times of the user accounts (A1:5, B1:20, C1:15, D1:35) and the active times (100) of all the user accounts, which are 5% for user account A1, 20% for user account B1, 15% for user account C1 and 35% for user account D1.

In step 303, user accounts with first activities greater than a predetermined first threshold are determined.

Assuming that the predetermined first threshold is 18%, the user accounts with first activities greater than the predetermined first threshold are user account B1 (20%) and user account D1 (35%).

In step 304, first activities of all user accounts in social groups including the user accounts with first activities greater than the predetermined first threshold are determined.

User account B1 joins in social group Y1, and there are nine other user accounts in social group Y1, which are E1, E2, E3, E4, E5, E6, E7, E8 and E9. First activities of these nine user accounts are 15% for user account E1, 23% for user account E2, 22% for user account E3, 10% for user account E4, 7% for user account E5, 12% for user account E6, 20% for user account E7, 9% for user account E8, and 21% for user account E9. User account D1 joins in two social groups Y2 and Y3. There are seven other user accounts in social group Y2, which are F1, F2, F3, F4, F5, F6 and F7. First activities of these seven user accounts are 18% for user account F1, 13% for user account F2, 2% for user account F3, 10% for user account F4, 7% for user account F5, 12% for user account F6 and 26% for user account F7. There are ten other user accounts in social group Y3, which are G1, G2, G3, G4, G5, G6, G7, G8, G9 and G10. First activities of these ten user accounts are 16% for user account G1, 14% for user account G2, 20% for user account G3, 20% for user account G4, 17% for user account G5, 19% for user account G6, 26% for user account G7, 30% for user account G8, 5% for user account G9, and 6% for user account G10.

In step 305, a number of user accounts with first activities reaching a predetermined third threshold is determined.

In social group Y1, the number of user accounts with first activities reaching the predetermined third threshold 18% is 5. In social group Y2, the number of user accounts with first activities reaching the predetermined third threshold 18% is 2. In social group Y3, the number of user accounts with first activities reaching the predetermined third threshold 18% is 6.

In step 306, a social group in which the number of user accounts with first activities reaching the predetermined third threshold is greater than a predetermined fifth threshold is determined.

Assuming that the predetermined fifth threshold is 5 (i.e. it is necessary that the number of user accounts with first activities reaching the predetermined third threshold is greater than 5), then in social groups Y1, Y2 and Y3, it is only social group Y3 in which the number of user accounts with first activities reaching the predetermined third threshold is greater than the predetermined fifth threshold.

Social group Y3 is determined as the social group required to be sent the notification of partially-upgrading.

In step 307, terminal devices corresponding to the user accounts with first activities reaching the predetermined first threshold in social group Y3 are determined.

In step 308, upgrade packages of partially-upgrading are sent to the determined terminal devices.

With the method for partially-upgrading according to embodiments of the present disclosure, it is determined whether a social group is an active social group by determining activities of all user accounts in the social group. If the social group is an active social group, a notification of partially-upgrading is sent to the social group. In this way, a scope of social groups required to be sent the notifications is reduced, and it is ensured that the determined social group includes more terminal device identifications of terminal devices required to be partially-upgraded.

An implementation of partially-upgrading is known with reference to above-mentioned descriptions. The implementation is realized by a mobile terminal, a router or a server. In the following, an internal structure and functions of a device for partially-upgrading are described.

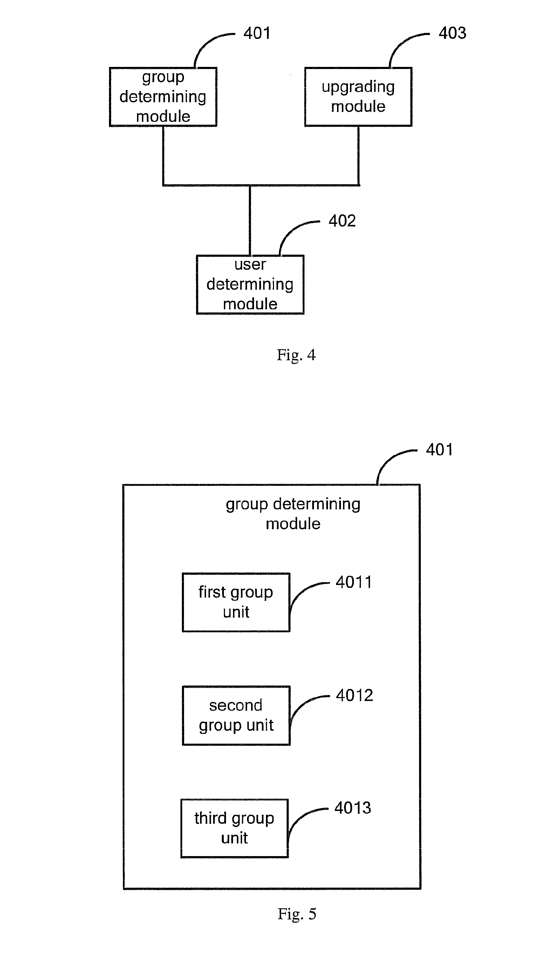

Fig. 4 is a block diagram illustrating a device for partially-upgrading according to an exemplary embodiment of the present disclosure. Referring to Fig. 4, the device for partially-upgrading includes a group determining module 401, a user determining module 402 and an upgrading module 403.

The group determining module 401 is configured to determine a social group to be partially-upgraded.

The user determining module 402 is configured to determine user accounts to be partially-upgraded in the social group.

The upgrading module 403 is configured to partially-upgrade applications corresponding to the user accounts according to predetermined relationships between the user accounts and application identifications or partially-upgrade devices corresponding to the user accounts according to predetermined relationships between the user accounts and device identifications.

In an embodiment, as shown in Fig. 5, the group determining module 401 includes a first group unit 4011, a second group unit 4012 or a third group unit 4013.

The first group unit 4011 is configured to define a social group with a second activity greater than a predetermined second threshold as the social group to be partially-upgraded.

The second group unit 4012 is configured to determine a plurality of user accounts with third activities greater than a predetermined third threshold and define a common social group comprising the plurality of user accounts as the social group to be partially-upgraded.

The third group unit 4013 is configured to define a social group with a fourth activity regarding a predetermined keyword greater than a predetermined fourth threshold as the social group to be partially-upgraded.

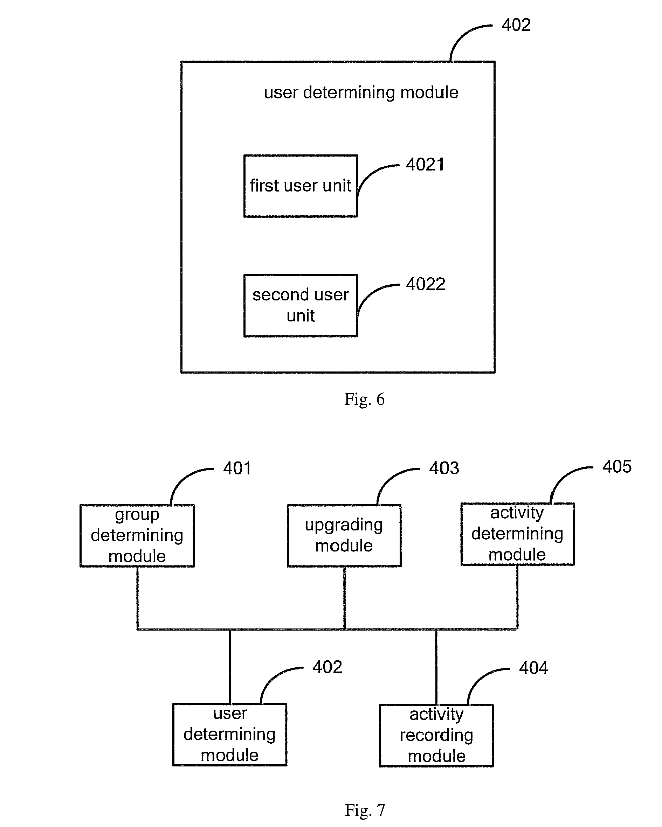

In an embodiment, as shown in Fig. 6, the user determining module 402 includes a first user unit 4021 and a second user unit 4022.

The first user unit 4021 is configured to define all user accounts in the social group as the user accounts to be partially-upgraded.

The second user unit 4022 is configured to determine user accounts with first activities greater than a predetermined first threshold in the social group.

In an embodiment, as shown in Fig. 7, the device further includes an activity recording module 404 and an activity determining module 405.

The activity recording module 404 is configured to obtain a latest record of an activity of a user account, in which the record comprises active times of the user account in a predetermined time period, and active times of all other user accounts in a same social group as the user account.

The activity determining module 405 is configured to determine the first activity of the user account according to the active times of the user account and the active times of all other user accounts in the same social group as the user account.

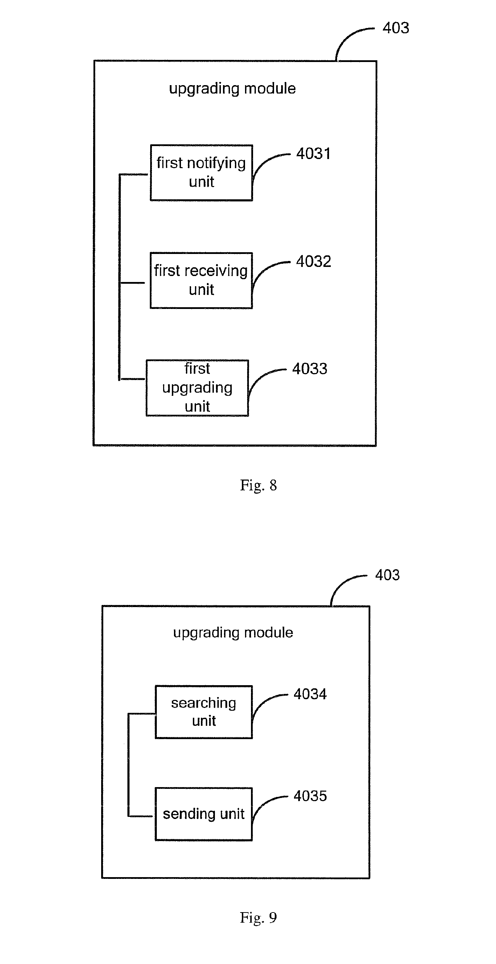

In an embodiment, as shown in Fig. 8, the upgrading module 403 includes a first notifying unit 4031, a first receiving unit 4031 and a first upgrading unit 4033.

The first notifying unit 4031 is configured to send notifications of partially-upgrading to the determined user accounts.

The first receiving unit 4032 is configured to receive responses indicating that it is allowed to partially-upgrade.

The first upgrading unit 4033 is configured to partially-upgrade the applications corresponding to the user accounts according to the predetermined relationships between the user accounts and application identifications or partially-upgrade the devices corresponding to the user accounts according to the predetermined relationships between the user accounts and device identifications.

In an embodiment, as shown in Fig. 9, the upgrading module 403 includes a searching unit 4034 and a sending unit 4035.

The searching unit 4034 is configured to determine the application identifications corresponding to the user accounts according to the predetermined relationships between the user accounts and application identifications or determine the device identifications corresponding to the user accounts according to the predetermined relationships between the user accounts and device identifications.

The sending unit 4035 is configured to send the application identifications or the device identifications to an upgrading server to instruct the upgrading server to partially-upgrade the applications or the devices corresponding to the user accounts.

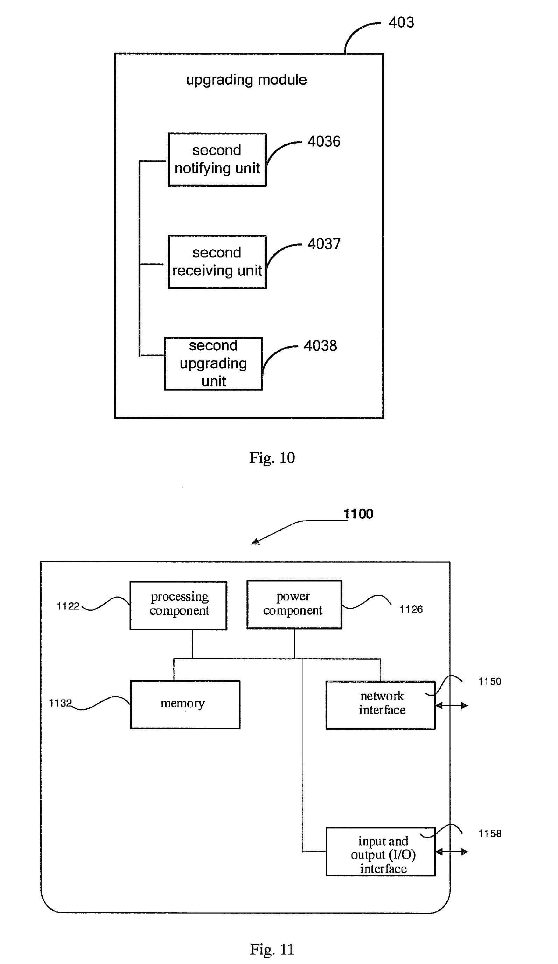

In an embodiment, as shown in Fig. 10, the upgrading module 403 includes a second notifying unit 4036, a second receiving unit 4037 and a second upgrading unit 4038.

The second notifying unit 4036 is configured to send notifications of partially-upgrading to the user accounts according to the predetermined relationships between the user accounts and application identifications or the predetermined relationships between the user accounts and device identifications, in which the notifications comprise the application identifications or the device identifications corresponding to the determined user accounts.

The second receiving unit 4037 is configured to receive upgrading requests sent by the applications or the devices corresponding to the user accounts.

The second upgrading unit 4038 is configured to partially-upgrade the applications or the devices corresponding to the user accounts.

With respect to the devices in above embodiments, the specific operation manners for individual modules therein refer to those described in detail in the embodiments regarding the methods, which are not elaborated herein again.

Fig. 11 is a block diagram of a device 1100 for partially-upgrading according to an exemplary embodiment of the present disclosure. For example, the device 1100 may be provided as a computer. Referring to Fig. 11, the device 1100 may include a processing component 1122 including one or more processors, and a memory resource represented by a memory 1132 for storing instructions (such as application programs) executable by the processing component 1122. The application programs stored in the memory 1132 may include one or more modules, and each module may correspond to a series of instructions. Furthermore, the processing component 1122 may be configured to execute the instructions so as to perform the above-mentioned method for partially-upgrading.

The device 1100 may further include a power component 1126 configured to perform a power management of the device 1100, a wired or wireless network interface 1150 configured to connect the device 1100 to the internet, and an input and output (I/O) interface 1158. The device 1100 may operate an operating system stored in the memory 1132, such as Windows ServerTM, Mac OS XTM, UnixTM, LinuxTM, FreeBSDTM and so on.

A device for partially-upgrading includes:
a processor;
a memory configured to store instructions executable by the processor;
in which the processor is configured to:
   determine a social group to be partially-upgraded;
   determine user accounts to be partially-upgraded in the social group;
   partially-upgrade applications corresponding to the user accounts according to predetermined relationships between the user accounts and application identifications or partially-upgrade devices corresponding to the user accounts according to predetermined relationships between the user accounts and device identifications.

The processor is further configured to determine a social group to be partially-upgraded by a step of:
defining a social group with a second activity greater than a predetermined second threshold as the social group to be partially-upgraded; or
determining a plurality of user accounts with third activities greater than a predetermined third threshold and defining a common social group comprising the plurality of user accounts as the social group to be partially-upgraded; or
defining a social group with a fourth activity regarding a predetermined keyword greater than a predetermined fourth threshold as the social group to be partially-upgraded.

The processor is further configured to determine user accounts to be partially-upgraded in the social group by a step of:
defining all user accounts in the social group as the user accounts to be partially-upgraded; or
determining user accounts with first activities greater than a predetermined first threshold in the social group.

The processor is further configured to obtain a first activity of a user account by steps of:
obtaining a latest record of an activity of the user account, in which the record comprises active times of the user account in a predetermined time period, and active times of all other user accounts in a same social group as the user account;
determining the first activity of the user account according to the active times of the user account and the active times of all other user accounts in the same social group as the user account.

The processor is further configured to partially-upgrade applications corresponding to the user accounts according to predetermined relationships between the user accounts and application identifications or partially-upgrading devices corresponding to the user accounts according to predetermined relationships between the user accounts and device identifications by steps of:
sending notifications of partially-upgrading to the user accounts;
receiving responses indicating that it is allowed to partially-upgrade;
partially-upgrading the applications corresponding to the user accounts according to the predetermined relationships between the user accounts and application identifications or partially-upgrading the devices corresponding to the user accounts according to the predetermined relationships between the user accounts and device identifications.

The processor is further configured to partially-upgrade applications corresponding to the user accounts according to predetermined relationships between the user accounts and application identifications or partially-upgrading devices corresponding to the user accounts according to predetermined relationships between the user accounts and device identifications by steps of:
determining the application identifications corresponding to the user accounts according to the predetermined relationships between the user accounts and application identifications or determining the device identifications corresponding to the user accounts according to the predetermined relationships between the user accounts and device identifications;
sending the application identifications or the device identifications to an upgrading server to instruct the upgrading server to partially-upgrade the applications or the devices corresponding to the user accounts.

The processor is further configured to partially-upgrade applications corresponding to the user accounts according to predetermined relationships between the user accounts and application identifications or partially-upgrading devices corresponding to the user accounts according to predetermined relationships between the user accounts and device identifications by steps of:
sending notifications of partially-upgrading to the user accounts according to the predetermined relationships between the user accounts and application identifications or the predetermined relationships between the user accounts and device identifications, in which the notifications comprise the application identifications or the device identifications corresponding to the user accounts;
receiving upgrading requests sent by the applications or the devices corresponding to the user accounts;
partially-upgrading the applications or the devices corresponding to the user accounts.

A non-transitory computer-readable storage medium having stored therein instructions that, when executed by a processor of a mobile terminal, causes the mobile terminal to perform a method for partially-upgrading. The method includes:
determining a social group to be partially-upgraded;
determining user accounts to be partially-upgraded in the social group;
partially-upgrading applications corresponding to the user accounts according to predetermined relationships between the user accounts and application identifications or partially-upgrading devices corresponding to the user accounts according to predetermined relationships between the user accounts and device identifications.

The instructions in the non-transitory computer-readable storage medium may further include:
determining a social group to be partially-upgraded including:
   defining a social group with a second activity greater than a predetermined second threshold as the social group to be partially-upgraded; or
   determining a plurality of user accounts with third activities greater than a predetermined third threshold and defining a common social group comprising the plurality of user accounts as the social group to be partially-upgraded; or
   defining a social group with a fourth activity regarding a predetermined keyword greater than a predetermined fourth threshold as the social group to be partially-upgraded.

The instructions in the non-transitory computer-readable storage medium may further include:
determining user accounts to be partially-upgraded in the social group including:
   defining all user accounts in the social group as the user accounts to be partially-upgraded; or
   determining user accounts with first activities greater than a predetermined first threshold in the social group.

The instructions in the non-transitory computer-readable storage medium may further include:
a first activity of a user account being obtained by:
   obtaining a latest record of an activity of the user account, in which the record comprises active times of the user account in a predetermined time period, and active times of all other user accounts in a same social group as the user account;
   determining the first activity of the user account according to the active times of the user account and the active times of all other user accounts in the same social group as the user account.

The instructions in the non-transitory computer-readable storage medium may further include:
partially-upgrading applications corresponding to the user accounts according to predetermined relationships between the user accounts and application identifications or partially-upgrading devices corresponding to the user accounts according to predetermined relationships between the user accounts and device identifications including:
   sending notifications of partially-upgrading to the user accounts;
   receiving responses indicating that it is allowed to partially-upgrade;
   partially-upgrading the applications corresponding to the user accounts according to the predetermined relationships between the user accounts and application identifications or partially-upgrading the devices corresponding to the user accounts according to the predetermined relationships between the user accounts and device identifications.

The instructions in the non-transitory computer-readable storage medium may further include:
partially-upgrading applications corresponding to the user accounts according to predetermined relationships between the user accounts and application identifications or partially-upgrading devices corresponding to the user accounts according to predetermined relationships between the user accounts and device identifications including:
   determining the application identifications corresponding to the user accounts according to the predetermined relationships between the user accounts and application identifications or determining the device identifications corresponding to the user accounts according to the predetermined relationships between the user accounts and device identifications;
   sending the application identifications or the device identifications to an upgrading server to instruct the upgrading server to partially-upgrade the applications or the devices corresponding to the user accounts.

The instructions in the non-transitory computer-readable storage medium may further include:
partially-upgrading applications corresponding to the user accounts according to predetermined relationships between the user accounts and application identifications or partially-upgrading devices corresponding to the user accounts according to predetermined relationships between the user accounts and device identifications including:
   sending notifications of partially-upgrading to the user accounts according to the predetermined relationships between the user accounts and application identifications or the predetermined relationships between the user accounts and device identifications, in which the notifications comprise the application identifications or the device identifications corresponding to the user accounts;
   receiving upgrading requests sent by the applications or the devices corresponding to the user accounts;
   partially-upgrading the applications or the devices corresponding to the user accounts.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for partially-upgrading, comprising:
determining (101) a social group to be partially-upgraded;
determining (102) user accounts to be partially-upgraded in the social group;
partially-upgrading (103) applications corresponding to the user accounts according to predetermined relationships between the user accounts and application identifications or partially-upgrading (103) devices corresponding to the user accounts according to predetermined relationships between the user accounts and device identifications.

2. The method according to claim 1, wherein determining user accounts to be partially-upgraded in the social group comprises:
defining all user accounts in the social group as the user accounts to be partially-upgraded; or
determining user accounts with first activities greater than a predetermined first threshold in the social group.

3. The method according to claim 2, wherein a first activity of a user account is obtained by:
obtaining a latest record of an activity of the user account, in which the record comprises active times of the user account in a predetermined time period, and active times of all other user accounts in a same social group as the user account;
determining the first activity of the user account according to the active times of the user account and the active times of all other user accounts in the same social group as the user account.

4. The method according to claim 1, wherein determining a social group to be partially-upgraded comprises:
defining a social group with a second activity greater than a predetermined second threshold as the social group to be partially-upgraded; or
determining a plurality of user accounts with third activities greater than a predetermined third threshold and defining a common social group comprising the plurality of user accounts as the social group to be partially-upgraded; or
defining a social group with a fourth activity regarding a predetermined keyword greater than a predetermined fourth threshold as the social group to be partially-upgraded.

5. The method according to claim 1, wherein partially-upgrading applications corresponding to the user accounts according to predetermined relationships between the user accounts and application identifications or partially-upgrading devices corresponding to the user accounts according to predetermined relationships between the user accounts and device identifications comprises:
sending notifications of partially-upgrading to the user accounts;
receiving responses indicating that it is allowed to partially-upgrade;
partially-upgrading the applications corresponding to the user accounts according to the predetermined relationships between the user accounts and application identifications or partially-upgrading the devices corresponding to the user accounts according to the predetermined relationships between the user accounts and device identifications.

6. The method according to claim 1, wherein partially-upgrading applications corresponding to the user accounts according to predetermined relationships between the user accounts and application identifications or partially-upgrading devices corresponding to the user accounts according to predetermined relationships between the user accounts and device identifications comprises:
determining the application identifications corresponding to the user accounts according to the predetermined relationships between the user accounts and application identifications or determining the device identifications corresponding to the user accounts according to the predetermined relationships between the user accounts and device identifications;
sending the application identifications or the device identifications to an upgrading server to instruct the upgrading server to partially-upgrade the applications or the devices corresponding to the user accounts.

7. The method according to claim 1, wherein partially-upgrading applications corresponding to the user accounts according to predetermined relationships between the user accounts and application identifications or partially-upgrading devices corresponding to the user accounts according to predetermined relationships between the user accounts and device identifications comprises:
sending notifications of partially-upgrading to the user accounts according to the predetermined relationships between the user accounts and application identifications or the predetermined relationships between the user accounts and device identifications, wherein the notifications comprise the application identifications or the device identifications corresponding to the user accounts;
receiving upgrading requests sent by the applications or the devices corresponding to the user accounts;
partially-upgrading the applications or the devices corresponding to the user accounts.

8. A device for partially-upgrading, comprising:
a group determining module (401), configured to determine a social group to be partially-upgraded;
a user determining module (402), configured to determine user accounts to be partially-upgraded in the social group;
an upgrading module (403), configured to partially-upgrade applications corresponding to the user accounts according to predetermined relationships between the user accounts and application identifications or partially-upgrade devices corresponding to the user accounts according to predetermined relationships between the user accounts and device identifications.

9. The device according to claim 8, further comprising:
an activity recording module (404), configured to obtain a latest record of an activity of a user account, wherein the record comprises active times of the user account in a predetermined time period, and active times of all other user accounts in a same social group as the user account;
an activity determining module (405), configured to determine the first activity of the user account according to the active times of the user account and the active times of all other user accounts in the same social group as the user account.

10. The device according to claim 8, wherein the group determining module (401) comprises:
a first group unit (4011), configured to define a social group with a second activity greater than a predetermined second threshold as the social group to be partially-upgraded;
a second group unit (4012), configured to determine a plurality of user accounts with third activities greater than a predetermined third threshold and define a common social group comprising the plurality of user accounts as the social group to be partially-upgraded; or
a third group unit (4013), configured to define a social group with a fourth activity regarding a predetermined keyword greater than a predetermined fourth threshold as the social group to be partially-upgraded.

11. The device according to claim 8, wherein the user determining module (402) comprises:
a first user unit (4021) configured to define all user accounts in the social group as the user accounts to be partially-upgraded;
a second user unit (4022) configured to determine user accounts with first activities greater than a predetermined first threshold in the social group.

12. The device according to claim 8, wherein the upgrading module (403) comprises:
a first notifying unit (4031), configured to send notifications of partially-upgrading to the determined user accounts;
a first receiving unit (4032), configured to receive responses indicating that it is allowed to partially-upgrade;
a first upgrading unit (4033), configured to partially-upgrade the applications corresponding to the user accounts according to the predetermined relationships between the user accounts and application identifications or partially-upgrade the devices corresponding to the user accounts according to the predetermined relationships between the user accounts and device identifications.

13. The device according to claim 8, wherein the upgrading module (403) comprises:
a searching module (4034), configured to determine the application identifications corresponding to the user accounts according to the predetermined relationships between the user accounts and application identifications or determine the device identifications corresponding to the user accounts according to the predetermined relationships between the user accounts and device identifications;
a sending unit (4035), configured to send the application identifications or the device identifications to an upgrading server to instruct the upgrading server to partially-upgrade the applications or the devices corresponding to the user accounts.

14. The device according to claim 8, wherein the upgrading module (403) comprises:
a second notifying unit (4036), configured to send notifications of partially-upgrading to the user accounts according to the predetermined relationships between the user accounts and application identifications or the predetermined relationships between the user accounts and device identifications, wherein the notifications comprise the application identifications or the device identifications corresponding to the determined user accounts;
a second receiving unit (4037), configured to receive upgrading requests sent by the applications or the devices corresponding to the user accounts;
a second upgrading unit (4038), configured to partially-upgrade the applications or the devices corresponding to the user accounts.

15. A device for partially-upgrading, comprising:
a processor;
a memory configured to store instructions executable by the processor;
wherein the processor is configured to:
determine a social group to be partially-upgraded;
determine user accounts to be partially-upgraded in the social group;
partially-upgrade applications corresponding to the user accounts according to predetermined relationships between the user accounts and application identifications or partially-upgrade devices corresponding to the user accounts according to predetermined relationships between the user accounts and device identifications.

16. A computer program product having stored therein instructions that, when executed by a processor of a mobile terminal, causes the mobile terminal to perform:
determining a social group to be partially-upgraded;
determining user accounts to be partially-upgraded in the social group; and
partially-upgrading applications corresponding to the user accounts according to predetermined relationships between the user accounts and application identifications or partially-upgrading devices corresponding to the user accounts according to predetermined relationships between the user accounts and device identifications.
